# EUROPÄISCHE PATENTSCHRIFT

(11) **EP 1 944 107 B1**
(45) Veröffentlichungstag und Bekanntmachung des Hinweises auf die Patenterteilung: **22.07.2009**
(21) Anmeldenummer: 08003706.2
(22) Anmeldetag: 15.02.2007
(51) Int. Cl.: B23B 51/02, E21B 10/44

(54) **Bohrkopf für Bohrwerkzeug und Bohrwerkzeug**
Drill head for drill and drill
Tête de forage pour un outil de forage et outil de forage

(30) Priorität: 03.05.2006 DE 102006020538
(43) Veröffentlichungstag der Anmeldung: 16.07.2008
(62) Teilanmeldung aus: 07003250.3
(73) Patentinhaber: Irwin Industrial Tools GmbH, 85399 Hallbergmoos (DE)
(72) Erfinder: Sian, Kirpal Singh, 85435 Erding (DE); Pedersen, Hans, 7760 Hurup (DK); Geier, Manfred, 82178 Puchheim (DE)
(74) Vertreter: Schmid, Nils T.F.

(56) Entgegenhaltungen:
- EP-A- 1 125 664
- EP-A1- 1 045 112

## Beschreibung

Die Erfindung betrifft einen Bohrkopf für ein Bohrwerkzeug, insbesondere einen Gestein- und/oder Betonbohrer. Bei Bohrungen von Gestein oder Beton hat der Bohrkopf die wesentlichen Bohrbelastungen zu ertragen, weswegen für den Bohrkopf zumeist ein Hartmetall verwendet wird. Der Bohrkopf soll einen effektiven Materialabtrag bei geringem Verschleiß erreichen.

Aus EP 1 125 664 ist ein Bohrkopf gemäß dem Oberbegriff von Anspruch 1 bekannt.

Aus der DE 299 01 285 U1 ist beispielsweise ein Bohrwerkzeug mit einem Schaft und einem Bohrkopf bekannt, der mit einem Schlitz versehen ist, in welchem eine Bohrplatte angeordnet ist, die aus einem Hartmetall gefertigt ist. Die Abrasion von Gesteinsmaterial wird durch die Bohrplatte realisiert, welche stirnseitig eine in Seitenansicht V-förmige Hauptschneide aufweist. Um die Bohrplatte peripherieseitig zu verstärken, weist die in Draufsicht rechteckige Grundform der Bohrplatte radiale, dreiecksförmige Verbreiterungen auf. Es hat sich allerdings bei derartigen Bohrplatten gezeigt, daß bei Belastungsspitzen, wie bei dem Treffen des Bohrwerkzeugs auf eine Betonarmierung es zum Bruch der Bohrplatte insbesondere im Bereich des kantigen Übergangs der dreieckigen Verbreiterung in die rechteckige Grundform kommen kann.

Um die Festigkeit des Bohrkopfs zu erhöhen, ist es bekannt, so genannte Vollhartmetallköpfe einzusetzen, wie sie beispielsweise aus der DE 43 39 245 A1 bekannt sind. Der bekannte Vollhartmetallkopf kennzeichnet sich durch eine vieleckige symmetrische Form aus, die über eine Art Feder-Nutverbindung mit dem Stirnende eines Wendelschafts des Bohrwerkzeugs verbunden wird. Allerdings ergaben sich bei derartigen Vollhartmetallköpfen Schwierigkeiten einer festen Montage der Hartmetallköpfe an den Wendelschaft des Bohrwerkzeugs. Auch stellte der hohe Materialaufwand an Hartmetall zur Realisierung des Vollbohrkopfes einen nicht unerheblichen Kostenfaktor dar.

Ein alternativer Bohrkopf wird in dem EP 0 884 448 B1 vorgeschlagen, der einen im Wesentlichen prismatischen Körper mit einer bei einer Draufsicht im Wesentlichen X-förmigen

Grundform aufweist. Der Bohrkopf hat eine Mittelachse, die im monierten Zustand des Bohrkopfs mit der Bohrwerkzeugachse zusammenfällt. Der Bohrkopf hat eine Montageseite, an welcher er an einem Stirnende des Bohrwerkzeugs anzubringen ist, insbesondere in eine entsprechende X-förmige Nut in dem Stirnende des Bohrwerkzeugs einzusetzen ist. Der Bohrkopf hat eine der Montage diametral gegenüberliegende Stirnseite, an der eine Hauptschneide und eine Nebenschneide ausgebildet sind. Des Weiteren hat der Bohrkopf zwei diametral gegenüberliegende, eine im Wesentlichen in Axialrichtung erstreckende Abfuhrnut begrenzende, V-förmige Seitenflächen, zu denen sich jeweils eine der beiden Förderwendeln des Schafts des Bohrwerkzeugs erstrecken. Schließlich umfaßt der Bohrkopf zwei diametral gegenüberliegende, in Axialrichtung erstreckende Peripherie-Seiten, die, in Umfangsrichtung des Bohrkopfs betrachtet, zwischen den beiden V-förmigen Seitenflächen liegen. Die Peripherie-Seiten sind umfänglich durch eine in Drehrichtung des Bohrkopfs nachlaufende Axialkante und eine radial zurückgesetzte, in Drehrichtung vorlaufende Axialkante begrenzt. In beiden Peripherie-Seiten sind für einen Abtransport von Bohrmehl von den jeweiligen Schneiden Nuten eingebracht. Eine Nebenschneide ist derart zur Hauptschneide angeordnet, daß sie peripherieseitig über der Hauptschneide axial vorsteht. Es zeigte sich, daß bei dem gattungsgemäßen Bohrkopf aufgrund des markanten Nebenschneidenprofils Schwierigkeiten einer maßgenauen, wiederholbaren Fertigung des Bohrkopfs bestehen. Des Weiteren erschien die Effektivität des Bohrkopfs aufgrund eines mangelhaften Abtransports von Bohrmehl insbesondere von der Hauptschneide weg beeinträchtigt zu sein.

EP 1 125 663 A2 und EP 1 125 664 A2 offenbaren ein Bohrwerkzeug mit einem Vollhartmetallkopf mit einer Stirnseite, an der Haupt- und Nebenschneiden ausgebildet sind. In Draufsicht hat der Vollhartmetallkopf im wesentlichen eine Kreuzform mit vier über den Peripherierand des Schaftes herausragenden Schneidarmen, die jeweils eine Haupt- oder Nebenschneide bilden.

Es ist Aufgabe der Erfindung, die Nachteile des Stands der Technik zu überwinden, insbesondere einen Bohrkopf insbesondere aus Hartmetall der gattungsgemäßen Art derart weiterzubilden, daß bei Beachtung geringer Herstellungskosten und langer Standzeit die Bohreffektivität erhöht wird.

Diese Aufgabe wird in einem ersten Erfindungsaspekt durch die Merkmale von Anspruch 1 gelöst. Danach ist an der Stirnseite zumindest eine Rinne, vorzugsweise zwei zueinander bezüglich der Mittelachse punktsymmetrische Rinnen, zur Abfuhr von Bohrmehl ausgebildet. Erfindungsgemäß erstreckt sich die Rinne von einer Peripherie-Seite und mündet in einen Flächenschenkel der V-förmigen Seitenfläche, vorzugsweise sich verjüngend. Mit dieser erfindungsgemäßen Maßnahme wird bei Aufrechterhaltung eines sehr standfesten Bohrkopfs eine außerordentlich effektive Bohrmehlentsorgung über die Stirnseite hin zu dem durch die V-förmigen Seitenflächen begrenzten Freiraum und von der Peripherie-Seite weg ermöglicht, von dem das Bohrmehl über die Wendelnut längs des Bohrwerkzeugs abtransportiert werden kann.

Bei einer Weiterbildung der Erfindung umfaßt zumindest eine der Peripherie-Seiten des Bohrkopfs, vorzugsweise beide Peripherie-Seiten, eine radial konvexe Krümmung mit einem Radius bezüglich der Mittelachse, der in einer Umfangsrichtung des Bohrkopfs entlang der gesamten Peripherie-Seite kontinuierlich stetig abnimmt. Somit ist die Peripherie-Seite entsprechend der zu schaffenden Bohrnut geformt, wobei der Radius der Peripherie-Seite in Drehrichtung leicht abnimmt. Besonders bevorzugt ist eine kontinuierliche stetige Abnahme des Peripherie-Seitenradius entgegen der Drehrichtung des Bohrwerkzeugs. Überraschenderweise zeigte sich, daß die Bohreffektivität trotz der abfuhrnutfreien Peripherie-Seite ein Abtransport von Bohrmehl über den Freiraum benachbart den V-förmigen Seitenflächen ausreicht, um eine effektive Abrasierung durch den Bohrkopf zu gewährleisten. Neben der vereinfachten Bauform bei Aufrechthaltung einer konstanten Bohrleistung konnte mit der erfindungsgemäßen Maßnahme die Standzeit des Bohrkopfs deutlich verlängert werden, weil durch die Abfuhrnut eingebrachte Schwachstellen an der Peripherie-Seite nunmehr entbehrt sind und die konvexe Peripherie-Seite eine saubere Führung des Bohrkopfs in der geschaffenen Bohrnut sicherstellt.

Bei einer bevorzugten Ausführung der Erfindung weist zumindest einer der Peripherie-Seiten, vorzugsweise beide Peripherie-Seiten, eine in Drehrichtung vorlaufende Axialkante und eine in Drehrichtung nachlaufende Axialkante auf, wobei der Radius der nachlaufenden Axialkante gegenüber dem Radius der vorlaufenden Axialkante radial zurückgesetzt ist und der Radius der Peripherie-Seite zwischen der vorlaufenden Axialkante und der nachlaufenden Axialkante der Radius geringfügig kontinuierlich stetig abnimmt. Der radiale Rückversatz der nachlaufenden Axialkante entspricht etwa weniger als 10 %, vorzugsweise etwa 8 %, des Mittelachsabstands der vorlaufenden Axialkante.

Ein mit dem oben genannten Erfindungsgegenstand kombinierbarer Erfindungsaspekt betrifft eine deutliche Verbesserung der Abrasionseffektivität des Bohrkopfs. Danach kann eine Hauptschneide von der Mittelachse geradlinig und radial ausgerichtet. Die Hauptschneide erstreckt sich wie eine Diagonale der Stirnseite von der Mittelachse insbesondere in Radialrichtung knickfrei hin zu beiden Peripherie-Seiten. Vorzugsweise münden die Hauptschneiden bezüglich der Radialrichtung unterbrechungsfrei in die Peripherie-Seiten. Mit der erfindungsgemäßen Maßnahme wurde überraschenderweise auch eine ergonomische Verbesserung bei der Handhabung des mit dem erfindungsgemäßen Bohrkopfs versehenen Bohrwerkzeugs erreicht, weil durch die geradlinige, radiale Hauptschneide durch die Mittelachse hindurch ein einfaches, positionsstabiles Anbohren gewährleistet ist. Zudem stellte sich heraus, daß neben der gesteigerten Abrasionseffektivität die Standzeit des Bohrkopfs aufgrund des stetigen Verlaufs der Hauptschneide verlängert ist.

Bei einer Weiterbildung der Erfindung unterteilt die Hauptschneide die Stirnseite in zwei insbesondere identische Stirnseitenflügel, die von der Hauptschneide hin zu der jeweiligen V-förmigen Seitenfläche des Bohrkopfs abfällt. Der Stirnseitenflügel kann axial konkav gewölbt sein, und insbesondere der andere Stirnflügel kann dagegen plan sein, wobei vorzugsweise beide Stirnflügel axial konkav gewölbt sind. Bei einer bevorzugten Ausgestaltung der Erfindung kann an einem Stirnseitenflügel wenigstens ein axialer, von der Stirnseite vorstehender Vorsprung, vorzugsweise zwei axiale Vorsprünge, mit jeweils einer Nebenschneide ausgebildet sein, die sich von einem Flächenschenkel der V-förmigen Seitenfläche zumindest teilweise zur Hauptschneide erstreckt.

Insbesondere kann die Hauptschneide für einen peripherieseitigen Abschnitt einen ersten insbesondere konstanten Neigungswinkel und für einen mittelachsenseitigen Abschnitt einen zweiten insbesondere konstanten Neigungswinkel aufweisen, der bezüglich einer Radialebene, zu der die Mittelachse eine Ebenennormale ist, spitzwinklig liegt und größer als der erste Neigungswinkel ist.

Bei einer Weiterbildung der Erfindung kann eine an der Stirnseite ausgebildete Nebenschneide die Hauptschneide in der Mittelachse kreuzen und sich zu den V-förmigen Seitenflächen erstrecken. Vorzugsweise münden die Nebenschneide und die Hauptschneide in eine gemeinsame insbesondere punktförmige Spitze, durch welche die Mittelachse verläuft. Die Stirnseite kann vorzugsweise zumindest teilweise pyramidenförmig sein. Außerdem kann sowohl die Nebenschneide als auch die Hauptschneide zu einer Radialebene geneigt sind, zu der die Mittelachse eine Ebenennormale ist. Vorzugsweise ist die Nebenschneide radial, insbesondere derart gekrümmt, daß die Nebenschneide bei Draufsicht eine S-Form aufweist. Insbesondere kann die Nebenschneide axial konkav gewölbt sein.

Bei einer Weiterbildung der Erfindung kann die Rinne durch eine Vertiefung mit einem axial konkaven, insbesondere teilzylindrischen Boden gebildet sein. Vorzugsweise weist die Rinne einen ersten insbesondere teilkegelstumpfförmigen Abschnitt auf, der sich verjüngend von der Peripherie-Seite hin zur Mittelachse erstreckt, wobei vorzugsweise ein zweiter insbesondere teilkegelstumpfförmiger Abschnitt an den ersten Rinnenabschnitt anschließt und insbesondere sich weitend oder verjüngend in den Flächenschenkel mündet. Vorzugsweise liegen die Rinnenabschnitte in einem stumpfen Winkel zueinander. Der erste Rinnenabschnitt liegt mittig in der Stirnfläche und erstreckt sich von der Peripherie-Seite bis wenigstens den halben Weg zur Mittelachse radial.

Bei einer bevorzugten Ausführung der Erfindung unterteilt eine Hauptschneide die Stirnseite in zwei Stirnseitenflügel, wobei die Rinne in dem insbesondere in Drehrichtung nachlaufenden Stirnseitenflügel eingearbeitet ist. Vorzugsweise fällt die Hauptschneide mit einem Begrenzungsrand der Rinne zumindest annähernd zusammen.

Bei einer Weiterbildung der Erfindung mündet ein an der Stirnseite ausgebildeter Verbindungskanal von dem in Drehrichtung vorlaufenden Flächenschenkel der V-förmigen Seitenfläche in die Rinne. Vorzugsweise weist der Verbindungskanal eine geringere axiale Tiefe als die Rinne auf und/oder ist im peripherieseitennahen Bereich der Stirnseite eingebracht. Die Rinne kann zumindest im Bereich der Peripherie-Seite wenigstens 50%, vorzugsweise über 60%, der radialen Breite der Stirnseite einnehmen.

Weitere Eigenschaften, Vorteil und Merkmale der Erfindung werden durch die folgende Beschreibung bevorzugter Ausführungen anhand der Zeichnungen deutlich, in denen zeigen:
Figur 1a eine perspektivische Ansicht einer Ausführung eines Bohrkopfs;
Figur 1b eine Seitenansicht auf eine Peripherie-Seite des Bohrkopfs gemäß Figur 1a;
Figur 1c eine Seitenansicht auf die V-förmige Seitenfläche des Bohrkopfs gemäß Figur 1a;
Figur 1d eine Draufsicht auf die Stirnansicht des Bohrkopfs gemäß Figur 1a;
Figur 2a eine perspektivische Ansicht einer Ausführung eines erfindungsgemäßen Bohrkopfs;
Figur 2b eine Seitenansicht auf die Peripherie-Seite des Bohrkopfs gemäß Figur 2a;
Figur 2c eine Seitenansicht auf die V-förmige Seitenfläche des Bohrkopfs gemäß Figur 2a;
Figur 2d eine Draufsicht auf die Stirnseite des Bohrkopfs gemäß Figur 2a;
Figur 3a eine perspektivische Ansicht einer Ausführung eines Bohrkopfs;
Figur 3b eine Seitenansicht auf die Peripherie-Seite des Bohrkopfs gemäß Figur 3a;
Figur 3c eine Seitenansicht auf die V-förmige Seite des Bohrkopfs gemäß Figur 3a;
Figur 3d eine Draufsicht auf die Stirnseite des Bohrkopfs gemäß Figur 3a;
Figur 4a eine perspektivische Ansicht einer Ausführung eines erfinderischen Bohrkopfs;
Figur 4b eine Seitenansicht auf die Peripherie-Seite des Bohrkopfs gemäß Figur 4a;
Figur 4c eine Seitenansicht auf die V-förmige Seitenfläche des Bohrkopfs gemäß Figur 4a;
Figur 4d eine Draufsicht auf die Stirnseite des Bohrkopfs gemäß Figur 4d;
Figur 5a eine perspektivische Ansicht einer Ausführung des erfindungsgemäßen Bohrkopfs;
Figur 5b eine Seitenansicht auf die Peripherie-Seite des Bohrkopfs gemäß Figur 5a;
Figur 5c eine Seitenansicht auf die V-förmige Seitenfläche des Bohrkopfs gemäß Figur 5a;
Figur 5d eine Draufsicht auf die Stirnseite des Bohrkopfs gemäß Figur 5a;
Figur 6a eine perspektivische Ansicht einer Ausführung eines erfindungsgemäßen Bohrkopfs;
Figur 6b eine Seitenansicht auf die Peripherie-Seite des Bohrkopfs gemäß Figur 6a;
Figur 6c eine Seitenansicht auf die V-förmige Seitenfläche des Bohrkopfs gemäß Figur 6a;
Figur 6d eine Draufsicht auf die Stirnseite des Bohrkopfs gemäß Figur 6a;
Figur 7a eine perspektivische Ansicht einer Ausführung eines Bohrkopfs;
Figur 7b eine Seitenansicht auf die Peripherie-Seite des Bohrkopfs gemäß Figur 7a;
Figur 7c eine Seitenansicht auf die V-förmige Seitenfläche des Bohrkopfs gemäß Figur 7a; und
Figur 7d eine Draufsicht auf die Stirnseite des Bohrkopfs gemäß Figur 7a.

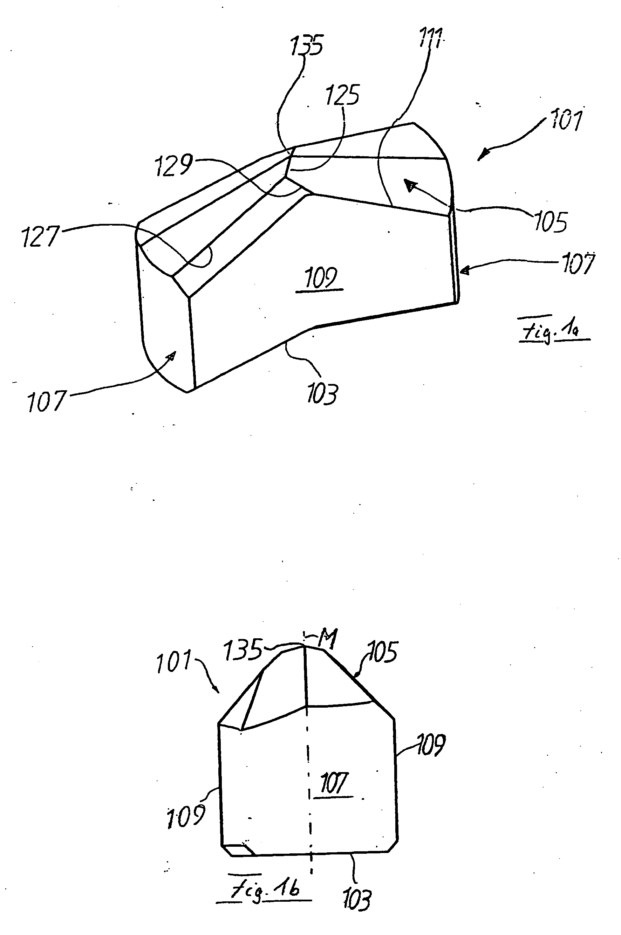

In den Figuren 1a bis 1d ist eine Ausführung des Bohrkopfs im Allgemeinen mit Bezugsziffer 101 versehen. Der Bohrkopf 101 ist aus einem Hartmetallstück zu einem einteiligen Körper gefertigt, der im Wesentlichen durch vier Hauptseiten definiert ist, nämlich eine Montageseite 103, die einem Stirnende eines nicht dargestellten Bohrwerkzeugs bei der Montage des Bohrkopfs 101 zuzuwenden ist; eine der Montageseite gegenüberliegende Stirnseite 105, die mit Schneidkanten versehen ist; zwei sich diametral gegenüberliegende Peripherie-Seiten 107, die sowohl in die Stirnseite 105 als auch in die Montageseite 103 mündet, und zwei sich diametral gegenüberliegende, V-förmige Seitenflächen 109.

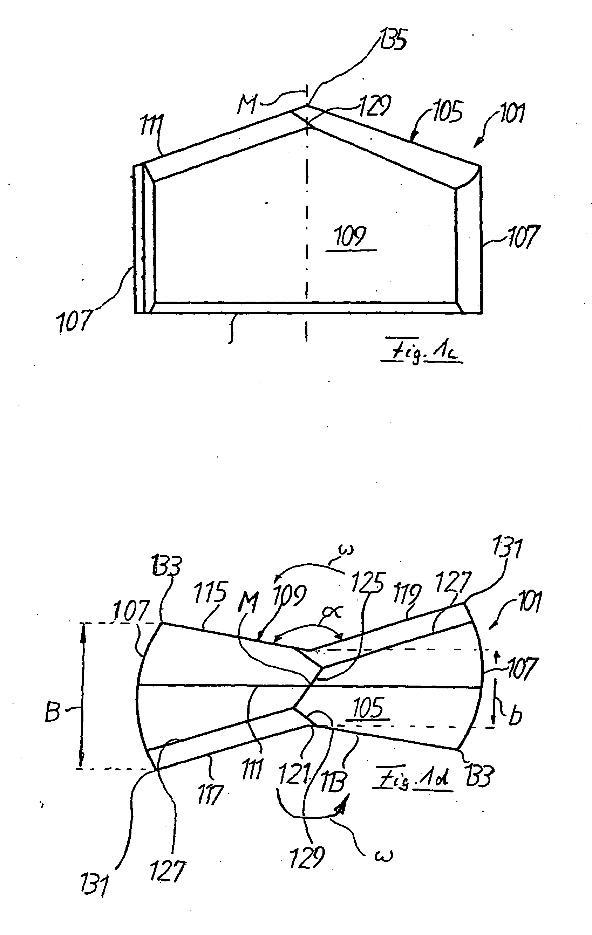

Wie insbesondere in Figur 1d ersichtlich ist, ist der Bohrkopf 101 an der Stirnseite 105 mit einer bezüglich einer Radialrichtung knickfreien, geradlinigen, durch eine Mittelachse M des Bohrkopfs radial verlaufenden Hauptschneide 111 versehen, die sich von der Peripherie-Seite 107 geradlinig, stetig quer über eine gesamte Stirnseitenhälfte zur Mittelachse M erstreckt und dort in Axialrichtung unter Ausbilden einer punktförmigen Spitze abknickt und mit der selben Steigung geradlinig und knickfrei zur gegenüberliegenden Peripherie-Seite 107 verläuft. Die Hauptschneide 111 unterteilt die Stirnseite 105 in zwei punktsymmetrische Stirnseitenflügel.

Wie insbesondere Figuren 1a und 1d zeigen, hat der Bohrkopf 101 einen im Wesentlichen prismatischen Grundkörper mit zwei Paaren parallele Flächenschenkel 113, 115 und 117, 119 der V-förmigen Seitenflächen. Die zwei die V-förmige Seitenfläche 109 bildenden Flächenschenkel 113, 117 bzw. 115, 119 spannen einen stumpfen Winkel α von etwas 152° auf. Der Körper des Bohrkopfs 101 umfaßt auf Höhe der Mittelachse M eine Einschnürung 121, dessen radiale Breite b mindestens 50% der maximalen, radialen Breite B an der Peripherie-Seite 107 entspricht.

Eine erste Nebenschneide 125 kreuzt die Hauptschneide 111 in der Mittelachse M und bildet mit der Hauptschneide 111 einen stumpfen bzw. spitzen Winkel und erstreckt sich im Wesentlichen über die Hälfte der Breite b des Bohrkopfs 101 im Bereich der Einschnürung 121. An der ersten Nebenschneide 125 zweigen eine zweite und dritte Nebenschneide 127 und 129 ab, wobei die zweite, lange Nebenschneide 127 parallel zum Flächenschenkel 117 bzw. 119 liegt und der dritte Nebenschenkel in die Einschnürung 121 mündet. Die Hauptschneide 111 und die Nebenschneide 125 bilden an der Stirnseite 105 eine Pyramidenform.

Die Peripherie-Seiten 107 sind kontinuierlich stetig gekrümmt, insbesondere annähernd kreisförmig, wobei der Krümmungsgrad der Peripherie-Seite 107 an der in Drehrichtung ω vorlaufenden Axialrand 131 weniger stark ausgeprägt ist als der Krümmungsgrad der Peripherie-Seite 107 an dem in Drehrichtung ω nachlaufenden Axialrand 133.

Also ist ein Mittelachsabstand des vorlaufenden Axialrands 131 geringfügig größer als der Mittelachsabstand des nachlaufenden Axialrands 133. Der Mittelachsabstand nimmt kontinuierlich stetig von dem vorlaufenden Axialrand 131 im umfänglichen Verlauf der Peripherie-Seite 107 hin zum nachlaufenden Axialrand 133 ab. Im Verlauf der Peripherie-Seite 107 ist bevorzugt, eine Mittelachsabstandreduzierung um mindestens 1%, vorzugsweise 8%, zu realisieren. Mit dem stetig kontinuierlichen mittelnutabfuhrfreien Verlauf der Peripherie-Seite 107 ist eine positionsgenaue Führung des Bohrwerkzeugs bzw. des Bohrkopfs innerhalb des Bohrlochs möglich, wodurch Fehlstellungen und Vibrationen beim Bohren reduziert werden können.

Eine besonders hohe Standfestigkeit für den Bohrkopf 101 wird erfindungsgemäß deswegen erreicht, weil die Hauptschneide 111 sich knickfrei in radialer Richtung von der Peripherie-Seite 107 hin zur Mittelachse M erstreckt und dort punktförmig eine Spitze 135 bildet.

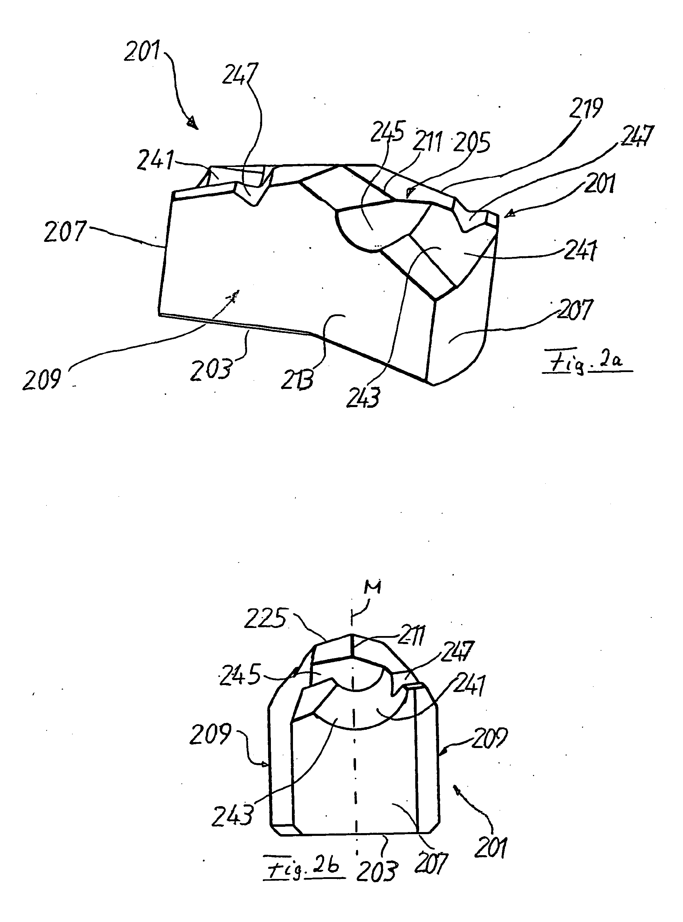

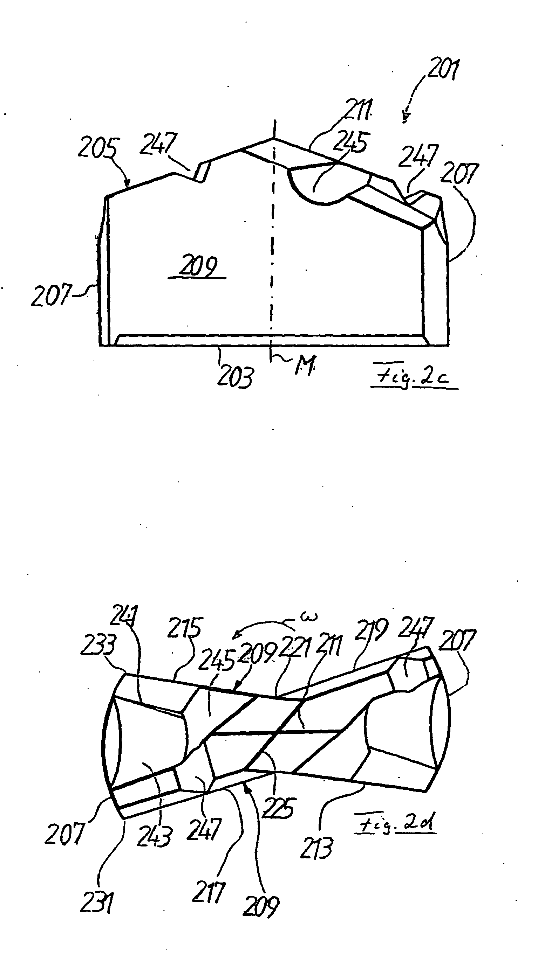

In den Figuren 2a bis 2d ist eine erfindungsgemäße Ausführung eines Bohrkopfs dargestellt, wobei zur besseren Lesbarkeit der Figurenbeschreibung und zur Vermeidung von Wiederholungen, für identische und ähnliche Bestandteile des Bohrkopfs der zweiten Ausführung die gleichen Bezugsziffern wie bei der Ausführung gemäß den Figuren 1a bis 1d verwendet wurden, die um 100 erhöht sind.

Der Bohrkopfs 201 unterscheidet sich von dem Bohrkopf 101 gemäß Figur 1 darin, daß in der Stirnseite 205 eine Rinne 241 mit einem axial konkaven Boden eingearbeitet ist, die sich in einem ersten Rinnenabschnitt 243 von der Peripherie-Seite 207 in Radialrichtung hin zur Mittelachse M verjüngend erstreckt. An den ersten Abschnitt 243 der Rinne 241 schließt ein zweiter, sich leicht weitender Abschnitt 244 an, der in einen Flächenschenkel 213 bzw. 215 mündet. Zwischen dem ersten Rinnenabschnitt 243 und dem zweiten Rinnenabschnitt 245 besteht ein stumpfer Winkel von etwa 130 bis 145 Grad.

Von der dem Flächenschenkel 213 gegenüberliegenden Flächenschenkel 219 ist in der Stirnseite 205 des Bohrkopfs 201 ein Verbindungskanal 247 eingearbeitet, der eine geringere radiale Tiefe als die Rinne 241 aufweist. Der Verbindungskanal 247 weist einen im wesentlichen trichterförmigen Querschnitt auf und erleichtert den Abfluß von Bohrmehl über die Rinne hin zum vorlaufenden Flächenschenkel 217, 219.

Mit der erfindungsgemäßen Ausführung gemäß den Figuren 2a bis 2d ist ein besonders effektiver Bohrmehlabtransport aus dem Schneidbereich des Bohrkopfs 201 realisiert, wobei ein zentraler Schneidenbereich in der Mitte um die Mittelachse M herum gebildet ist.

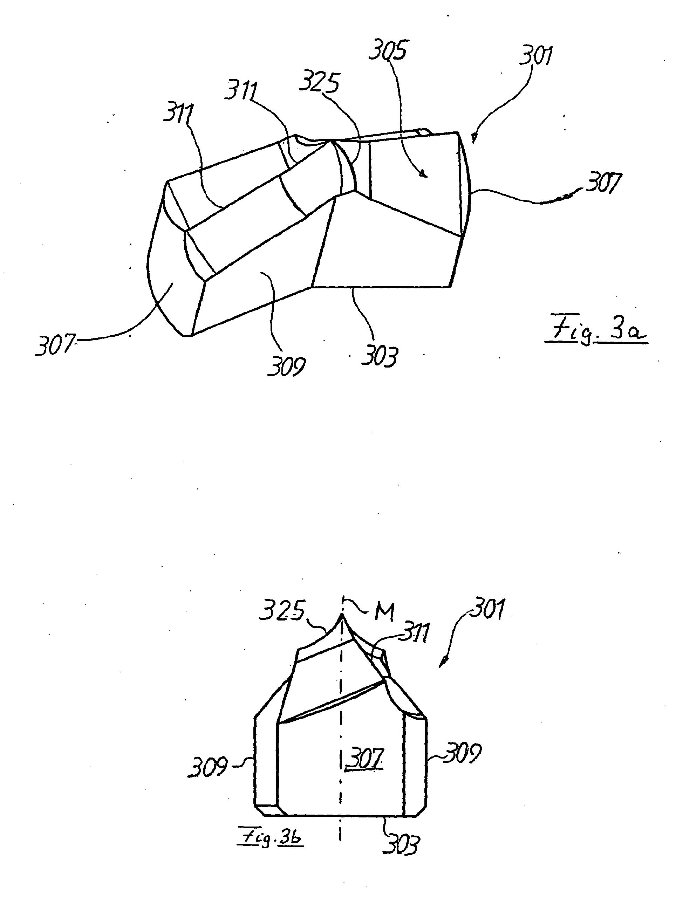

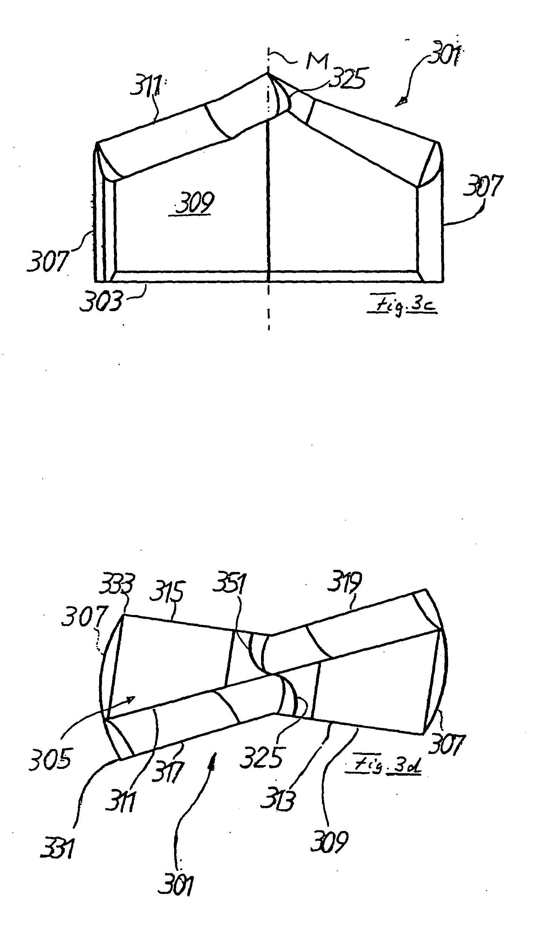

In den Figuren 3a bis 3d ist eine Ausführung eines Bohrkopfs dargestellt, wobei zur besseren Lesbarkeit die Figurenbeschreibung für gleiche oder ähnliche Bestandteile die gleichen Bezugsziffern wie bei den zuvor beschriebenen Bohrköpfen 101, 201 verwendet werden, welche gleiche Bezugsziffern um 100 bzw. 200 erhöht sind.

Der Bohrkopf 301 gemäß den Figuren 3a bis 3d unterscheidet sich im wesentlichen von dem Bohrkopf 101 gemäß den Fig. 1a bis d darin, dass die durch die Hauptschneide 311 gebildeten Stirnseitenflügel der Stirnseite 305 axial konkav gewölbt sind. Des weiteren unterscheidet sich der Bohrkopf 301 gegenüber den vorgenannten Bohrköpfen 101, 201 dadurch, dass im Bereich der Mittelachse M die konstante Steigung der Hauptschneide 311 gegenüber der konstanten Steigung der Hauptschneide 311 im peripheren Bereich größer ist. Auf diese Weise entsteht ein aus der Stirnseite 305 herausragender, pyramidenförmiger, in eine Punktspitze zulaufender Spitzenbereich, der sowohl durch die Hauptschneide 311 als auch durch eine Nebenschneide 325 gebildet ist, die sich von der Mittelachse M radial hin zu den Flächenschenkeln 315 bzw. 313 erstreckt. Die Nebenschneide 325 hat in Draufsicht im wesentlichen eine S-Form.

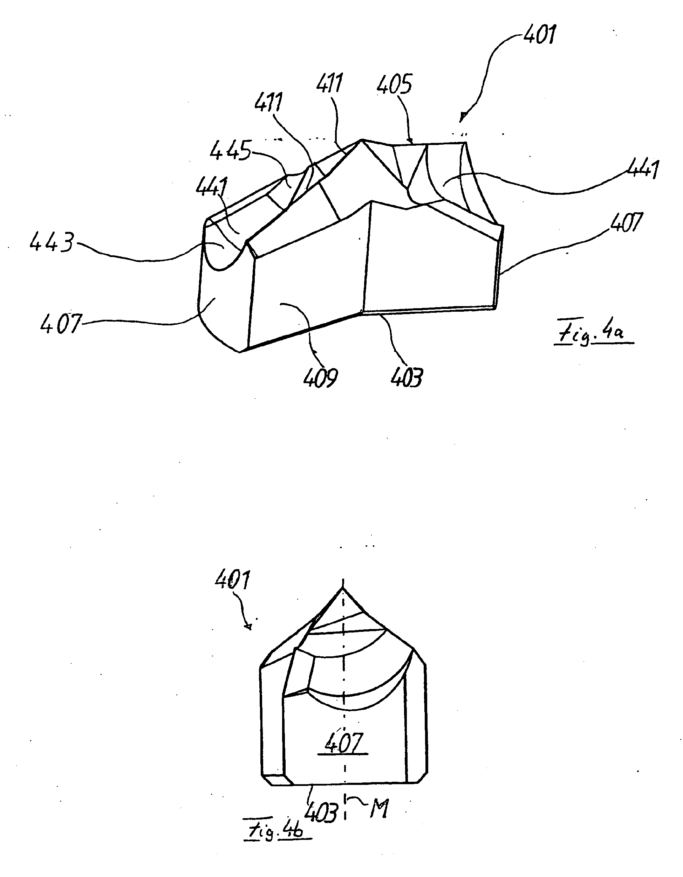

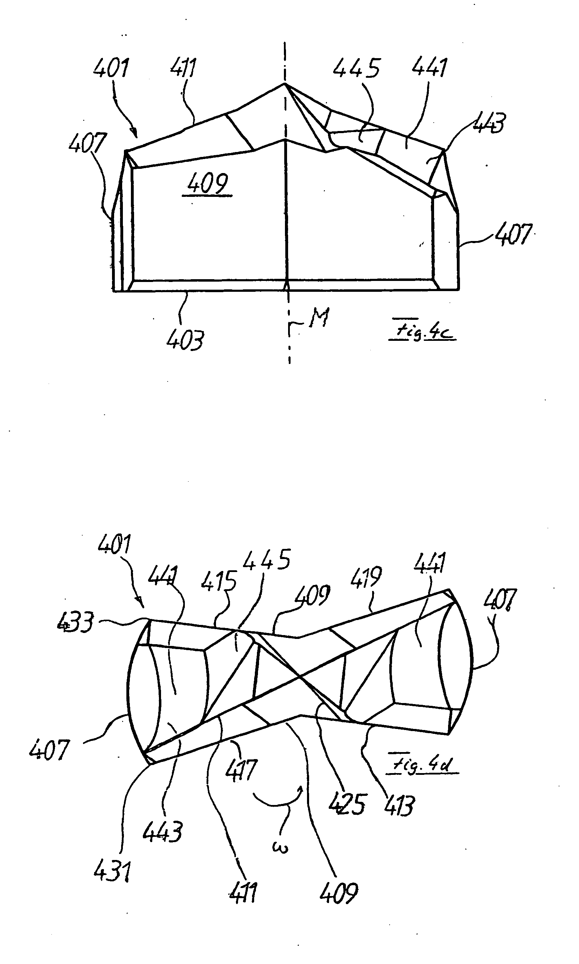

Die Figuren 4a bis 4d zeigen eine bevorzugte Ausführung des erfindungsgemäßen Bohrkopfs, wobei zur besseren Lesbarkeit für gleiche oder ähnliche Bauteile die identischen Bezugsziffern zu den oben genannten Bohrköpfen 101, 201, 301 verwendet werden, die um 100, 200 bzw. 300 erhöht sind.

Der Bohrkopf 401 unterscheidet sich von dem Bohrkopf 201 gemäß den Figuren 2a bis 2d darin, dass die Hautschneide 411 und ein Begrenzungsrand der Rinne 441 zusammenfallen, so dass sich die Schneide 411 von der Peripherie-Seite 407 zur diametral gegenüberliegenden Peripherie-Seite 407 erstrecken kann. Somit liegt die mittig angeordnete Rinne 441 in einem der von der Hauptschneide 411 unterteilten Stirnseitenflügel der Stirnseite 405.

Als weiterer Unterschied zu der Ausführung gemäß den Figuren 2a bis 2d sei erwähnt, dass sich die Rinne 441 kontinuierlich von der Peripherie-Seite 407 hin zum Flächenschenkel 413 bzw. 415 verjüngt. Ein Verbindungskanal kann bei der Ausführung gemäß den Fig. 4a bis d entbehrt sein.

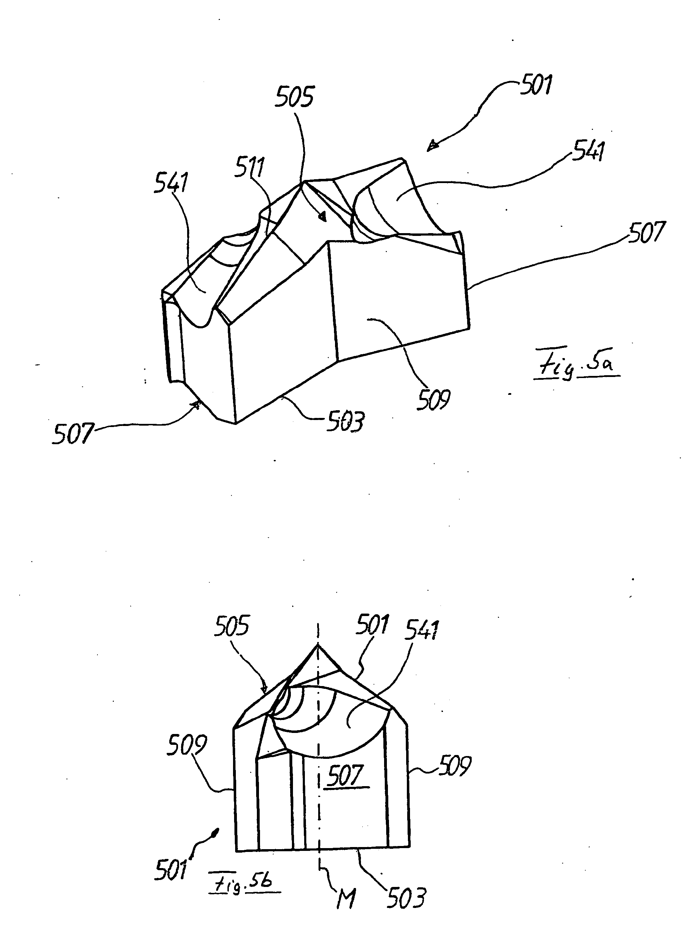

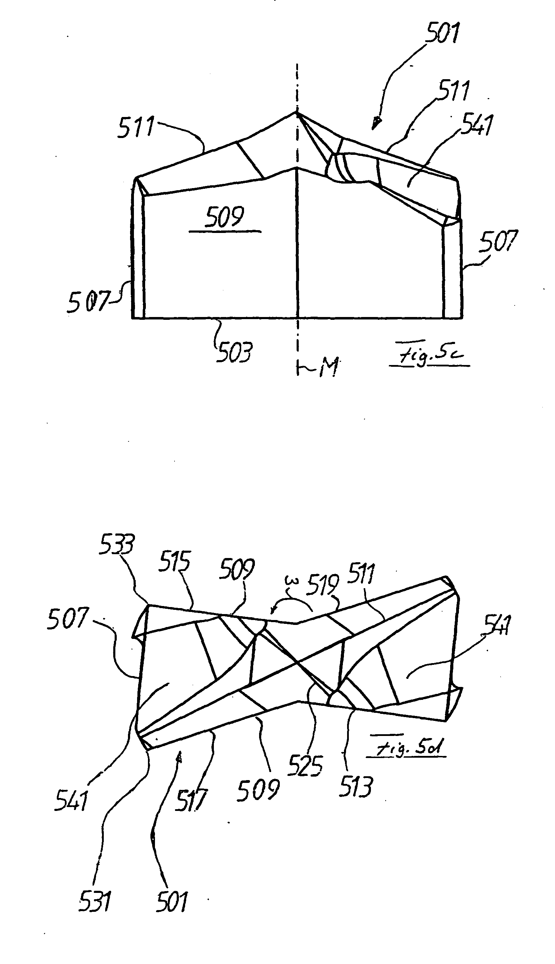

In den Figuren 5a bis 5d ist eine Ausführung eines erfindungsgemäßen Bohrkopfs dargestellt, wobei zur besseren Lesbarkeit der Figurenbeschreibung für ähnliche und identische Bestandteile des Bohrkopfs gleiche Bezugsziffern wie bei den oben genannten Bohrkopf-Ausführungen verwendet werden, die um 100, 200, 300 bzw. 400 erhöht sind.

Der Bohrkopf 501 unterscheidet sich von dem Bohrkopf gemäß den Figuren 4a bis 4d darin, dass der Begrenzungsrand der Rinne 541 nicht mit der Hauptschneide 511 zusammenfällt, sondern dazu versetzt angeordnet ist. Die Rinne 541 erstreckt sich nunmehr von der Peripherie-Seite 507 stets verjüngend hin zu einem Flächenschenkel 515 bzw. 513, ohne einen stumpfwinkelförmigen Knick im Verlauf der Rinne 541 zu haben. Vielmehr zeigt diese Ausführung eine winkelfreie Rinnenverbindung zwischen der Peripherie-Seite 507 und den in Drehrichtung ω nachlaufenden Flächenschenkel 515 bzw. 513 der V-förmigen Seitenfläche 509.

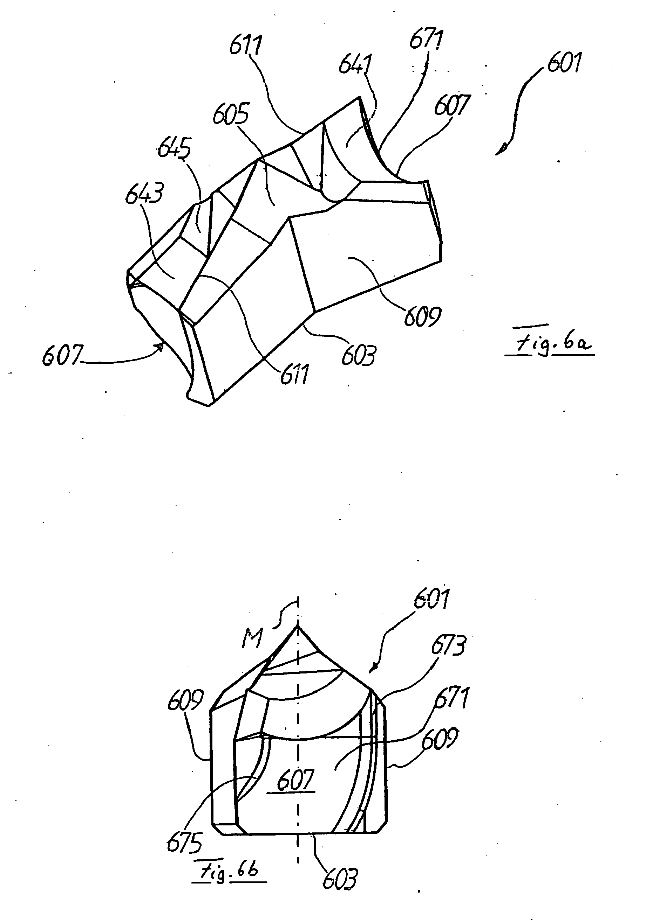

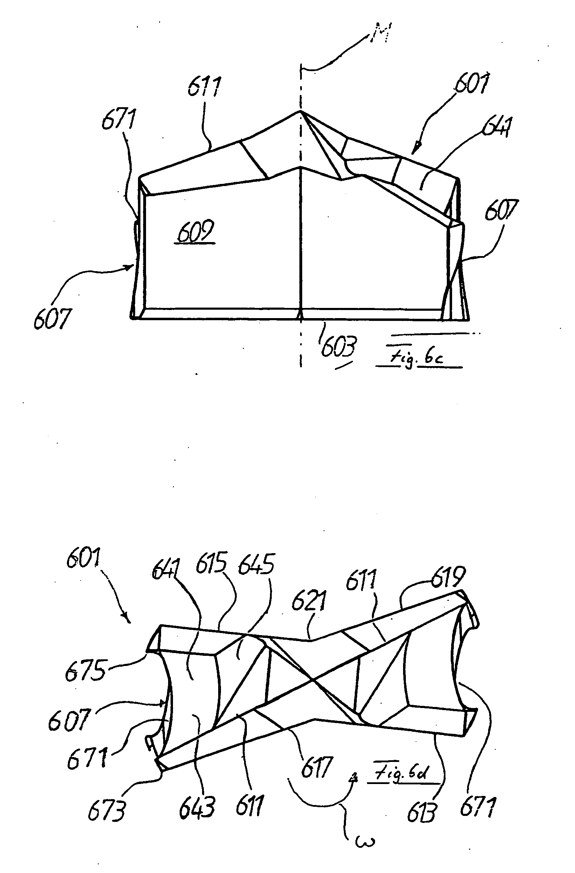

Die Figuren 6a bis 6d zeigen eine Ausführung eines erfindungsgemäßen Bohrkopfs, wobei zur besseren Lesbarkeit der Figurenbeschreibung für gleiche oder ähnliche Bestandteile des Bohrkopfs die gleichen Bezugsziffern wie bei den oben genannten Ausführungen verwendet werden, die um 100, 200, 300, 400, 500 bzw. 600 erhöht sind.

Die Ausführung gemäß den Figuren 6a bis 6d unterscheidet sich von der Ausführung gemäß den Figuren 4a bis 4d darin, dass die Peripherie-Seite 607 keine stets kontinuierlich gekrümmte Umfangfläche aufweist, sondern eine hauptsächlich axial verlaufende, wendelförmige Vertiefung 671 als Abfuhrnut mit einer nicht vernachlässigbaren Umfangsrichtungskomponente. Die Vertiefung 671 ist von radial vorstehenden Stegen 673, 675 in Umfangrichtung begrenzt ist. Die Vertiefung 671 verläuft wendelartig hin zu einer Förderwendel des nicht dargestellten Bohrwerkzeugschafts. Insofern sind die Stege 673, 675 gekrümmt, wobei die Krümmung von der Stirnseite 605 hin zur Montageseite 603 kontinuierlich ist, wobei die Umfangsbreite der Vertiefung in deren Verlauf gleich bleibt. Die Stege 673, 675 verlaufen im wesentlichen parallel zueinander. Der Boden der Vertiefung 671 ist radial konkav ausgebildet.

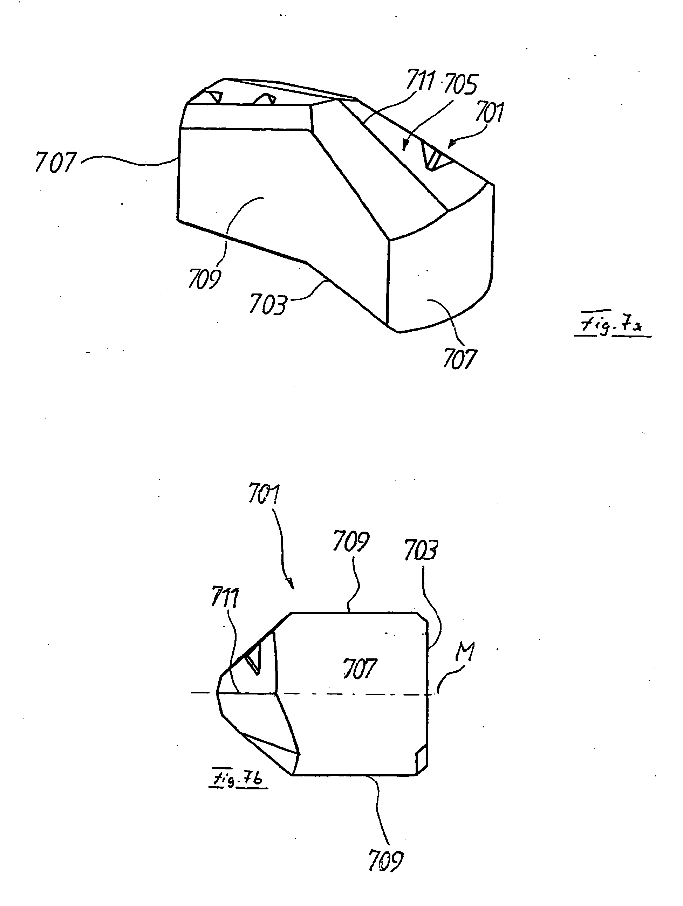

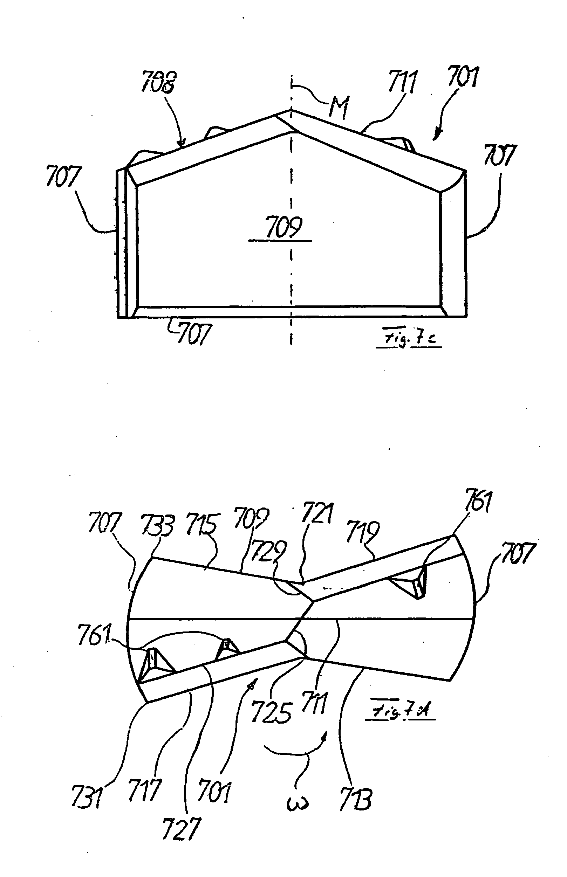

In den Figuren 7a bis 7d ist eine Ausführung des Bohrkopfs dargestellt, wobei zur besseren Lesbarkeit der Figurenbeschreibung für ähnliche und identische Bestandteile des Bohrkopfs die gleichen Bezugsziffern wie bei den oben genannten Ausführungen eingesetzt werden, die um 100, 200, 300, 400, 500 bzw. 600 erhöht sind.

Die Ausführung gemäß den Figuren 7a bis 7d unterscheidet sich von der Ausführung gemäß den Figuren 1a bis 1d darin, dass auf eine Seitenhälfte der Stirnseite ein Vorsprung und auf der anderen Seitenhälfte zwei Vorsprünge vorgesehen sind, deren Nebenschneiden 761 sich von der Nebenschneide 727 hin zur Hauptschneide 711 erstreckt, ohne diese zu erreichen.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 101, 201, 301, 401, 01, 601, 701: Bohrkopf
- 103, 203, 303, 403, 503, 603, 703: Montageseite
- 105, 205, 305, 405, 505, 605, 705: Stirnseite
- 107, 207, 307, 407, 507, 607, 707: Peripherie-Seite
- 109, 209, 309, 409, 509, 609, 709: V-förmige Seitenfläche
- 111, 211, 311, 411, 511, 611, 711: Hauptschneide
- 113, 115, 117, 119,: Flächenschenkel
- 213, 215, 217, 219,: "
- 313,315,317,319,: "
- 413, 415, 417, 419,: "
- 513,515,517,519: "
- 121, 221, 321, 421, 521, 621, 721: Einschnürung
- 125, 127, 129,: Nebenschneide
- 225,227,229,: "
- 325, 327, 329,: "
- 425,427,429,: "
- 525, 527, 529,: "
- 625, 627, 629,: "
- 725,727,761: "
- 131, 231, 331, 431, 531, 631, 731: vorlaufender Axialrand
- 133, 233, 333, 433, 533, 633, 733: nachlaufender Axialrand
- 135, 235, 335, 435, 535, 635, 735: punktförmige Spitze
- 241,441,541,641: Rinne
- 243, 245, 443, 445, 543, 545, 643, 645: Rinnenabschnitt
- 247: Verbindungskanal
- 671: Vertiefung
- 673, 675: Steg
- ω: Drehrichtung
- b: radiale Breite
- B: maximale radiale Breite
- M: Mittelachse

## Patentansprüche

1. Bohrkopf für ein Bohrwerkzeug, insbesondere einen Gesteins- und/oder Betonbohrer, mit einer Mittelachse (M), die im montierten Zustand des Bohrkopfs (101, 201, 301, 401, 601, 701) mit der Bohrwerkzeugachse zusammenfällt, einer dem Bohrwerkzeug zuzuwendenden Montageseite (103, 203, 303, 403, 603, 703), an welcher der Bohrkopf an einem Stirnende des Bohrwerkzeugs anzubringen ist, einer der Montageseite (103, 203, 303, 403, 603, 703) diametral gegenüberliegenden Stirnseite (105, 205, 305, 405, 605, 705), an der zumindest eine Schneide angeordnet ist, zwei diametral gegenüberliegenden, eine im wesentlichen in Axialrichtung erstreckende Abfuhrnut begrenzenden, V-förmigen Seitenflächen (109, 209, 309, 409, 609, 709) und zwei diametral gegenüberliegenden, in Axialrichtung erstreckenden Peripherie-Seiten (107, 207, 307, 407, 607, 707), die zwischen den beiden V-förmigen Seitenflächen (109, 209, 309, 409, 609, 709) liegen, **dadurch gekennzeichnet, dass** an der Stirnseite (205, 405, 505, 605) zumindest eine Rinne (241, 441, 541, 641), vorzugsweise zwei zueinander bezügliche der Mittelachse (M) punktsymmetrische Rinnen (241, 441, 541, 641), zur Abfuhr von Bohrmehl ausgebildet ist/sind, die sich von einer Peripherie-Seite (207, 307, 407, 507, 607, 707) erstreckt/en und in einen Flächenschenkel der V-förmigen Seitenfläche (209, 309, 409, 509, 609, 709) vorzugsweise sich verjüngend mündet/en.

2. Bohrkopf nach Anspruch 1, **dadurch gekennzeichnet, dass** zumindest einer der Peripherie-Seiten (107, 207, 307, 407, 607, 707), vorzugsweise beide Peripherie-Seiten (107, 207, 307, 407, 607, 707), eine radial konvexe Krümmung mit einem Radius bezüglich der Mittelachse (M) aufweist, der in einer umfänglichen Richtung längs der gesamten Peripherie-Seite (107, 207, 307, 407, 607, 707) kontinuierlich stetig abnimmt.

3. Bohrkopf nach Anspruch 1 oder 2, **dadurch gekennzeichnet, dass** zumindest einer der Peripherie-Seiten (107, 207, 307, 407, 607, 707), vorzugsweise beide Peripherie-Seiten (107, 207, 307, 407, 607, 707), frei einer radial konkaven Abfuhrnut ist/sind.

4. Bohrkopf nach einem der Ansprüche 1 bis 3, **dadurch gekennzeichnet, dass** zumindest einer der Peripherie-Seiten (107, 207, 307, 407, 607, 707), vorzugsweise beide Peripherie-Seiten, eine in Drehrichtung vorlaufende Axialkante und eine in Drehrichtung (ω) nachlaufende Axialkante aufweist, wobei der Radius der nachlaufenden Axialkante gegenüber dem Radius der vorlaufende Axialkante radial zurückgesetzt ist und der Radius längs der radial konvexen Peripherie-Seite (107, 207, 307, 407, 607, 707) zwischen dem Axialvorlaufrand und dem Axialnachlaufrand geringfügig kontinuierlich stetig abnimmt.

5. Bohrkopf nach einem der Ansprüche 1 bis 4, **dadurch gekennzeichnet, dass** sich an der Stirnseite (105, 205, 305, 405, 505, 605, 705) eine Hauptschneide von der Mittelachse (M) geradlinig und radial hin zu beiden Peripherie-Seiten (107, 207, 307, 407, 507, 607, 707) erstreckt, wobei insbesondere die Hauptschneide (111, 211, 311, 411, 511, 611, 711) als Diagonale die Stirnseite in zwei insbesondere identische Stirnseitenflügel unterteilt, die von der Hauptschneide (111, 211, 311, 411, 511, 611, 711) hin zu der jeweiligen V-förmigen Seitenfläche (109, 209, 309, 409, 509, 609, 709) abfällt, wobei insbesondere ein Stirnseitenflügel axial konkav gewölbt ist und insbesondere der andere Stirnseitenflügel plan ist, vorzugsweise beide Stirnseitenflügel axial konkav gewölbt sind, wobei insbesondere an einem Stirnflügel wenigstens ein axialer Vorsprung, vorzugsweise zwei axiale Vorsprünge, mit jeweils einer Nebenschneide aufweist, die sich von der V-förmigen Seitenfläche (709) zumindest teilweise zur Hauptschneide (711) erstreckt.

6. Bohrkopf nach Anspruch 5, **dadurch gekennzeichnet, dass** die Hauptschneide (111, 311, 411, 511, 611, 711) als Diagonale der Stirnseite (105, 205, 305, 405, 605, 705) in eine Peripherie-Seite (107, 207, 307, 407, 507, 607, 707), vorzugsweise beide Peripherie-Seiten, mündet.

7. Bohrkopf nach Anspruch 5 oder 6, **dadurch gekennzeichnet, dass** die Hauptschneide (311, 411, 511, 611) für einen peripherieseitigen Abschnitt einen ersten insbesondere konstanten Neigungswinkel und für einen mittelachsenseitigen Abschnitt einen zweiten insbesondere konstanten Neigungswinkel aufweist, der bezüglich einer Radialebene, zu der die Mittelachse (M) eine Ebenennormale ist, spitzwinklig liegt und größer als der erste Neigungswinkel ist.

8. Bohrkopf nach einem der Ansprüche 5 bis 7, **dadurch gekennzeichnet, dass** eine an der Stirnseite ausgebildete Nebenschneide (125, 225, 325, 425, 525, 625, 725) die Hauptschneide (111, 211, 311, 411, 511, 611, 711) in der Mittelachse (M) kreuzt und sich zu den V-förmigen Seitenflächen (109, 209, 309, 409, 509, 609, 709) erstreckt, wobei insbesondere die Nebenschneide (125, 225, 325, 425, 525, 625, 725) und die Hauptschneide in eine gemeinsame, insbesondere im wesentlichen punktförmige Spitze münden, durch welche die Mittelachse (M) verläuft, so daß insbesondere die Stirnseite (105, 205, 305, 405, 505, 605, 705) zumindest teilweise pyramidenförmig ist, wobei insbesondere sowohl die Nebenschneide (125, 225, 325, 425, 525, 625, 725) als auch die Hauptschneide (111, 211, 311, 411, 511, 611, 711) zu einer Radialebene geneigt sind, zu der die Mittelachse (M) eine Ebenennormale ist.

9. Bohrkopf nach Anspruch 8, **dadurch gekennzeichnet, dass** die Nebenschneide (325) radial, insbesondere radial derart gekrümmt ist, daß die Nebenschneide (325) bei Draufsicht eine S-Form aufweist.

10. Bohrkopf nach Anspruch 8 oder 9, **dadurch gekennzeichnet, dass** die Nebenschneide (325) axial konkav gewölbt ist.

11. Bohrkopf nach einem der Ansprüche 1 bis 10, **dadurch gekennzeichnet, dass** die Rinne (241, 441, 541, 641) durch eine Vertiefung mit einem axial konkaven, insbesondere teilzylindrischen Boden gebildet ist.

12. Bohrkopf nach einem der Ansprüche 1 bis 11, **dadurch gekennzeichnet, dass** die Rinne (241, 441, 641) einen ersten insbesondere teilkegelstumpfförmigen Abschnitt aufweist, der sich verjüngend von der Peripherie-Seite (207, 407, 607) hin zur Mittelachse (M) erstreckt, wobei vorzugsweise ein zweiter insbesondere teilkegelstumpfförmiger Abschnitt an den ersten Rinnenabschnitt anschließt und insbesondere sich weitend oder verjüngend in den Flächenschenkel mündet, wobei insbesondere die Rinnenabschnitte in einem stumpfen Winkel zueinander liegen, wobei insbesondere der erste Rinnenabschnitt mittig in der Stirnfläche (205, 405, 605) liegt und von der Peripherie-Seite (207, 407, 607) bis wenigstens den halben Weg zur Mittelachse (M) radial erstreckt.

13. Bohrkopf nach einem der Ansprüche 1 bis 12, **dadurch gekennzeichnet, dass** eine Hauptschneide (411, 511, 611) die Stirnseite (405, 505, 605) in zwei Stirnseitenflügel unterteilt, wobei die Rinne (441 ,541, 641) in dem insbesondere in Drehrichtung (ω) nachlaufenden Stirnseitenflügel ausgebildet ist, wobei insbesondere die Hauptschneide (411) mit einem Begrenzungsrand der Rinne (441) zumindest annähernd zusammenfällt.

14. Bohrkopf nach einem der Ansprüche 1 bis 13, **dadurch gekennzeichnet, dass** ein an der Stirnseite (205) ausgebildeter Verbindungskanal (247) von dem in Drehrichtung (ω) vorlaufenden Flächenschenkel der V-förmigen Seitenfläche (209) in die Rinne (241) mündet, wobei insbesondere der Verbindungskanal (247) eine geringere axiale Tiefe als die Rinne (241) aufweist und/oder im peripherieseitennahen Bereich der Stirnseite (205) eingebracht ist

15. Bohrkopf nach einem der Ansprüche 1 bis 14 , **dadurch gekennzeichnet, dass** die Rinne (241, 441, 541, 641) zumindest im Bereich der Peripherie-Seite (207, 407, 507, 607) wenigstens 50 %, vorzugsweise über 60 %, der radialen Breite der Stirnseite (205, 405, 505, 605) einnimmt.

## Claims

1. Boring head for a boring tool, in particular a rock and/or concrete borer, with a central axis (M) which coincides with the boring tool axis in the mounted state of the boring head (101, 201, 301, 401, 601, 701), a mounting side (103, 203, 303, 403, 603, 703) which is to face the boring tool and on which the boring head is to be attached to a face end of the boring tool, a face side (105, 205, 305, 405, 605, 705) which is diametrically opposite the mounting side (103, 203, 303, 403, 603, 703) and on which at least one cutting edge is arranged, two diametrically opposite, V-shaped lateral faces (109, 209, 3 09, 409, 609, 709) which delimit a removal groove substantially extending in the axial direction and two diametrically opposite peripheral sides (107, 207, 307, 407, 607, 707) extending in the axial direction and which lie between the two V-shaped lateral faces (109, 209, 309, 409, 609, 709), **characterised in that** at least one groove (241, 441, 541, 641), preferably two grooves (241, 441, 541, 641) which are point-symmetric to one another relative to the central axis (M), is/are formed on the face side (205, 405, 505, 605) for removal of boring dust, which groove(s) extend(s) from a peripheral side (207, 307, 407, 507, 607, 707) and open(s), preferably in a tapering manner, into a face leg of the V-shaped lateral face (209, 309, 409, 509, 609, 709).

2. Boring head according to Claim 1, **characterised in that** at least one of the peripheral sides (107, 207, 307, 407, 607, 707), preferably both peripheral sides (107, 207, 307, 407, 607, 707), has a radially convex curve with a radius relative to the central axis (M) which continuously, constantly reduces in a circumferential direction along the entire peripheral side (107, 207, 307, 407, 607, 707).

3. Boring head according to Claim 1 or 2, **characterised in that** at least one of the peripheral sides (107, 207, 307, 407, 607, 707), preferably both peripheral sides (107, 207, 307, 407, 607, 707), is/are free of a radially concave removal groove.

4. Boring head according to one of Claims 1 to 3, **characterised in that** at least one of the peripheral sides (107, 207, 307, 407, 607, 707), preferably both peripheral sides, has an axial edge running on in the rotational direction and an axial edge running behind in the rotational direction (ω), wherein the radius of the axial edge running behind is radially set back relative to the radius of the axial edge running on and the radius continuously, constantly slightly reduces along the radially convex peripheral side (107, 207, 307, 407, 607, 707) between the axial running-on edge and the axial running-behind edge.

5. Boring head according to one of Claims 1 to 4, **characterised in that** a main cutting edge extends on the face side (105, 205, 305, 405, 505, 605, 705) in a straight line from the central axis (M) and radially towards both peripheral sides (107, 207, 307, 407, 507, 607, 707), wherein in particular the main cutting edge (111, 211, 311, 411, 511, 611, 711) as a diagonal divides the face side into two in particular identical face side wings which reduces from the main cutting edge (111, 211, 311, 411, 511, 611, 711) towards the respective V-shaped lateral face (109, 209, 309, 409, 509, 609, 709), wherein in particular one face side wing is cambered in an axially concave manner and in particular the other face side wing is flat, preferably both face side wings are cambered in an axially concave manner, wherein, in particular on one face wing, at least one axial projection, preferably two axial projections, has at least one auxiliary cutting edge which extends from the V-shaped lateral face (709) at least partially to the main cutting edge (711).

6. Boring head according to Claim 5, **characterised in that** the main cutting edge (111, 311, 411, 511, 611, 711) as a diagonal of the face side (105, 205, 305, 405, 605, 705) opens into a peripheral side (107, 207, 307, 407, 507, 607, 707), preferably both peripheral sides.

7. Boring head according to Claim 5 or 6, **characterised in that** the main cutting edge (311, 411, 511, 611) for a peripheral-side section has a first in particular constant angle of inclination and for a central axis-side section a second in particular constant angle of inclination which lies at an acute angle relative to a radial plane, relative to which the central axis (M) is a plane normal, and is larger than the first angle of inclination.

8. Boring head according to one of Claims 5 to 7, **characterised in that** an auxiliary cutting edge (125, 225, 325, 425, 525, 625, 725) formed on the face side crosses the main cutting edge (111, 211, 311, 411, 511, 611, 711) in the central axis (M) and extends to the V-shaped lateral faces (109, 209, 309, 409, 509, 609, 709), wherein in particular the auxiliary cutting edge (125, 225, 325, 425, 525, 625, 725) and the main cutting edge open into a joint, in particular substantially punctiform tip through which the central axis (M) runs so that in particular the face side (105, 205, 305, 405, 505, 605, 705) is at least partially pyramid-shaped, wherein in particular both the auxiliary cutting edge (125, 225, 325, 425, 525, 625, 725) and the main cutting edge (111, 211, 311, 411, 511, 611, 711) are inclined to a radial plane with respect to which the central axis (M) is a plane normal.

9. Boring head according to Claim 8, **characterised in that** the auxiliary cutting edge (325) is radial, in particular radially curved such that the auxiliary cutting edge (325) has an S-shape in a top view.

10. Boring head according to Claim 8 or 9, **characterised in that** the auxiliary cutting edge (325) is cambered in an axially concave manner.

11. Boring head according to one of Claims 1 to 10, **characterised in that** the groove (241, 441, 541, 641) is formed by a recess with an axially concave, in particular partially cylindrical base.

12. Boring head according to one of Claims 1 to 11, **characterised in that** the groove (241, 441, 641) has a first in particular partially tapered section which extends in a tapering manner from the peripheral side (207, 407, 607) towards the central axis (M), wherein a second in particular partially tapered section preferably adjoins the first groove section and in particular opens in a widening or tapering manner into the side leg, wherein in particular the groove sections lie at an obtuse angle to one another, wherein in particular the first groove section lies centrally in the face side (205, 405, 605) and extends radially from the peripheral side (207, 407, 607) to at least half way to the central axis (M).

13. Boring head according to one of Claims 1 to 12, **characterised in that** a main cutting edge (411, 511, 611) divides the face side (405, 505, 605) into two face side wings, wherein the groove (441, 541, 641) is formed in the face side wing running on in particular in the rotational direction (ω), wherein in particular the main cutting edge (411) at least approximately coincides with a delimiting edge of the groove (441).

14. Boring head according to one of Claims 1 to 13, **characterised in that** a connecting duct (247) formed on the face side (205) opens from the face leg, running on in the rotational direction (ω), of the V-shaped lateral face (209) into the groove (241), wherein in particular the connecting duct (247) has a smaller axial depth than the groove (241) and/or is accommodated in the region of the face side (205) close to the peripheral side.

15. Boring head according to one of Claims 1 to 14, **characterised in that** the groove (241, 441, 541, 641) occupies, at least in the region of the peripheral side (207, 407, 507, 607), at least 50%, preferably more than 60%, of the radial width of the face side (205, 405, 505, 605).

## Revendications

1. Tête de forage pour un outil de forage, en particulier un outil de forage de roches et/ou de béton, comprenant un axe médian (M), qui coïncide dans l'état de montage de la tête de forage (101, 201, 301, 401, 601, 701) avec l'axe de l'outil de forage, un côté montage (103, 203, 303, 403, 603, 703) à tourner en direction de l'outil de forage, côté sur lequel la tête de forage peut être montée sur une extrémité frontale de l'outil de forage, un côté frontal (105, 205, 305, 405, 605, 705) en vis-à-vis diamétral du côté montage (103, 203, 303, 403, 603, 703), sur lequel est disposé au moins un tranchant, deux surfaces latérales en V (109, 209, 309, 409, 609, 709) en vis-à-vis diamétral, qui délimitent une gorge d'évacuation s'étendant essentiellement dans la direction axiale, et deux côtés périphériques (107, 207, 307, 407, 607, 707) en vis-à-vis diamétral, s'étendant dans la direction axiale, qui se situent entre les deux surfaces latérales en V (109, 209, 309, 409, 609, 709), **caractérisée en ce qu'**au moins une goulotte (241, 441, 541, 641), de préférence deux goulottes (241, 441, 541, 641) à symétrie ponctuelle l'une par rapport à l'autre par rapport à l'axe médian (M), est/sont réalisée(s) sur le côté frontal (205, 405, 505, 605) pour l'évacuation de poussières stériles, laquelle/lesquelles s'étend(ent) à partir d'un côté périphérique (207, 307, 407, 507, 607, 707) et débouche(nt), de préférence en se rétrécissant, dans une branche de la surface latérale en V (209, 309, 409, 509, 609, 709).

2. Tête de forage suivant la revendication 1, **caractérisée en ce qu'**au moins l'un des côtés périphériques (107, 207, 307, 407, 607, 707), de préférence les deux côtés périphériques (107, 207, 307, 407, 607, 707), présentent une courbure convexe dans la direction radiale avec un rayon par rapport à l'axe médian (M), qui diminue constamment en continu dans une direction circonférentielle le long de tout le côté périphérique (107, 207, 307, 407, 607, 707).

3. Tête de forage suivant l'une des revendications 1 et 2, **caractérisée en ce qu'**au moins l'un des côtés périphériques (107, 207, 307, 407, 607, 707), de préférence les deux côtés périphériques (107, 207, 307, 407, 607, 707), est/sont exempt(s) d'une gorge d'évacuation concave dans la direction radiale.

4. Tête de forage suivant l'une des revendications 1 à 3, **caractérisée en ce qu'**au moins l'un des côtés périphériques (107, 207, 307, 407, 607, 707), de préférence les deux côtés périphériques, présentent une arête axiale en avant dans la direction de rotation et une arête axiale en arrière dans la direction de rotation (ω), le rayon de l'arête axiale en arrière étant en déport dans la direction radiale par rapport au rayon de l'arête axiale en avant, et le rayon diminuant légèrement en continu, le long du côté périphérique convexe dans la direction radiale (107, 207, 307, 407, 607, 707), entre le bord en avant axial et le bord en arrière axial.

5. Tête de forage suivant l'une des revendications 1 à 4, **caractérisée en ce qu'**un tranchant principal s'étend linéairement sur le côté frontal (105, 205, 305, 405, 505, 605, 705) à partir de l'axe médian (M) et radialement en direction des deux côtés périphériques (107, 207, 307, 407, 507, 607, 707), le tranchant principal (111, 211, 311, 411, 511, 611, 711) subdivisant en particulier, sous forme de diagonale, le côté frontal en deux ailes de côté frontal en particulier identiques, qui chutent du tranchant principal (111, 211, 311, 411, 511, 611, 711) en direction de la surface latérale en V respective (109, 209, 309, 409, 509, 609, 709), une aile du côté frontal ayant en particulier une courbure concave dans la direction axiale et l'autre aile du côté frontal étant en particulier plane, les deux ailes du côté frontal ayant de préférence une courbure concave dans la direction axiale, au moins une saillie axiale, de préférence deux saillies axiales, étant en particulier prévues sur une aile frontale avec respectivement un tranchant auxiliaire, qui s'étend de la surface latérale en V (709), au moins en partie, en direction du tranchant principal (711).

6. Tête de forage suivant la revendication 5, **caractérisée en ce que** le tranchant principal (111, 311, 411, 511, 611, 711) débouche sous forme de diagonale du côté frontal (105, 205, 305, 405, 605, 705) dans un côté périphérique (107, 207, 307, 407, 507, 607, 707), de préférence dans les deux côtés périphériques.

7. Tête de forage suivant l'une des revendications 5 et 6, **caractérisée en ce que** le tranchant principal (311, 411, 511, 611) présente pour une section du côté périphérique un premier angle d'inclinaison en particulier constant et pour une section du côté axe médian un second angle d'inclinaison en particulier constant, qui se situe en angle aigu, par rapport à un plan radial par rapport auquel l'axe médian (M) est une normale au plan, et est plus élevé que le premier angle d'inclinaison.

8. Tête de forage suivant l'une des revendications 5 à 7, **caractérisée en ce qu'**un tranchant auxiliaire (125, 225, 325, 425, 525, 625, 725), réalisé sur le côté frontal, croise le tranchant principal (111, 211, 311, 411, 511, 611, 711) dans l'axe médian (M) et s'étend en direction des surfaces latérales (109, 209, 309, 409, 509, 609, 709) en V, en particulier le tranchant auxiliaire (125, 225, 325, 425, 525, 625, 725) et le tranchant principal débouchant dans une pointe commune, en particulier essentiellement ponctuelle, au travers de laquelle s'étend l'axe médian (M), de sorte qu'en particulier le côté frontal (105, 205, 305, 405, 505, 605, 705) est au moins en partie pyramidal, aussi bien le tranchant auxiliaire (125, 225, 325, 425, 425, 525, 625, 725) que le tranchant principal (111, 211, 311, 411, 511, 611, 711) étant en particulier inclinés en direction d'un plan radial, par rapport auquel l'axe médian (M) est une normale au plan.

9. Tête de forage suivant la revendication 8, **caractérisée en ce que** le tranchant auxiliaire (325) est cintré dans la direction radiale, en particulier cintré radialement de telle sorte que le tranchant auxiliaire (325) présente en vue du dessus une forme en S.

10. Tête de forage suivant l'une des revendications 8 et 9, **caractérisée en ce que** le tranchant auxiliaire (325) a une courbure concave dans la direction axiale.

11. Tête de forage suivant l'une des revendications 1 à 10, **caractérisée en ce que** la goulotte (241, 441, 541, 641) est formée par une cavité avec un fond concave dans la direction axiale, en particulier partiellement cylindrique.

12. Tête de forage suivant l'une des revendications 1 à 11, **caractérisée en ce que** la goulotte (241, 441, 641) présente une première section, en particulier en forme de tronc de cône partiel, qui s'étend en se rétrécissant du côté périphérique (207, 407, 607) en direction de l'axe médian (M), une seconde section, en particulier en forme de tronc de cône partiel, se raccordant de préférence à la première section de goulotte et débouchant en particulier, en s'élargissant ou en se rétrécissant, dans la branche de surface, les sections de goulotte se situant en particulier l'une par rapport à l'autre sous un angle obtus, la première section de goulotte se situant en particulier au centre de la surface frontale (205, 405, 605) et s'étendant dans la direction radiale du côté périphérique (207, 407, 607) jusqu'au moins le demi- parcours en direction de l'axe médian (M).

13. Tête de forage suivant l'une des revendications 1 à 12, **caractérisée en ce qu'**un tranchant principal (411, 511, 611) subdivise le côté frontal (405, 505, 605) en deux ailes de côté frontal, la goulotte (441, 541 , 641) étant réalisée dans l'aile de côté frontal en particulier en arrière dans la direction de rotation (ω), le tranchant principal (411) coïncidant en particulier, au moins approximativement, avec un bord de délimitation de la goulotte (441).

14. Tête de forage suivant l'une des revendications 1 à 13, **caractérisée en ce qu'**un canal de jonction (247), réalisé sur le côté frontal (205), débouche dans la goulotte (241) à partir de la branche de surface, en avant dans la direction de rotation (ω), de la surface latérale en V, le canal de jonction (247) présentant en particulier une profondeur axiale plus faible que la goulotte (241) et/ou étant pratiqué dans la zone proche du côté périphérique du côté frontal (205).

15. Tête de forage suivant l'une des revendications 1 à 14, **caractérisée en ce que** la goulotte (241, 441, 541, 641) occupe au moins dans la zone du côté périphérique (207, 407, 507, 607) au moins 50%, de préférence plus de 60%, de la largeur radiale du côté frontal (205, 405, 505, 605).
